# EUROPEAN PATENT SPECIFICATION

(11) **EP 1 234 149 B1**
(45) Date of publication and mention of the grant of the patent: **26.07.2006**
(21) Application number: 00980211.7
(22) Date of filing: 30.11.2000
(51) Int. Cl.: F25D 23/06

(54) **THE REFRIGERATOR**
KÜHLGERÄT
REFRIGERATEUR

(30) Priority: 01.12.1999 TR 9903005
(43) Date of publication of application: 28.08.2002
(73) Proprietor: Arçelik A.S., 81719 Istanbul (TR)
(72) Inventor: OGUZ, Emre, Tuzla, 81719 Istanbul (TR); ÖZKADI, Fatih, Bostanci, 81110 Istanbul (TR)
(74) Representative: LOUIS, PÖHLAU, LOHRENTZ
(86) International application number: PCT/TR2000/000061
(87) International publication number: WO 2001/040724

(56) References cited:
- EP-A- 0 844 446
- EP-A- 0 935 063
- WO-A-96/35089
- FR-A- 2 521 271
- FR-A- 2 679 020
- US-A- 2 059 840
- US-A- 2 573 583
- US-A- 2 690 653
- US-A- 5 284 022
- US-A- 5 964 101

## Description

The present invention is related to a refrigerator according to the preamble of claim 1. Such a refrigerator is disclosed in document US 5 642 622.

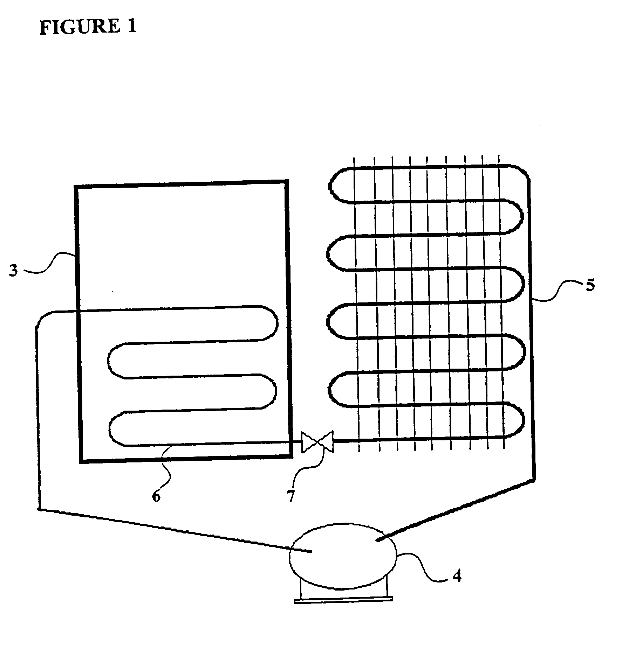

The cooling systems with compressors, that have been used for many years in the cooling applications such as refrigerators and airconditioners, mainly consist of four units; namely, a compressor, an evaporator used to draw out the thermal energy from the cooled refrigerator cabinet, a condenser used to discharge the thermal energy and a throttle valve or a capillary pipe to regulate the flow of the fluid circulating through the system, from high pressure to low pressure. In the domestic-type refrigerators wherein such conventional systems are used, the heat exchangers generally referred to as evaporators, that serve to absorb the thermal energy from the cooled air inside the refrigerator cabinet, are manufactured of metal pipes with various diameters depending on their functional properties. The thermal energy drawn out from the cooled air inside the refrigerator cabinet, after the compression of the refrigerant leaving the evaporator to a high pressure by means of the compressor, is transferred to the external environment, through the heat exchanger, named as the condenser. The function of the compressor within the system is to compress the refrigerant being at a low pressure and temperature while leaving the evaporator, to a high pressure (Figure 1).

The dimensions of the evaporators used in the conventional systems are determined after the required surface area is calculated according to the cabinet heat gain, the desired temperature of the air inside the cabinet, the evaporation temperature of the refrigerant, and the coefficients of thermal conduction and convection. In such an implementation, the limited heat transfer surface area requires high temperature differences whereas heat transmission at such a high temperature difference, increases the irreversibilities, which in turn leads to a decrease in the coefficient of performance of the system. The research and development studies made by various institutions show that the efficiency of the compressors used in such systems approach to an upper limit. However, it is also known that the refrigerants or cooling fluids used in the refrigerators having compressors, damage the ozon layer and cause a global warming.

Since 1930s, another thermodynamic cycle used to cool the electronic devices in low operating temperature practices, is the Stirling cycle. The US Patents No. 4858442, 4877434, 5056317, 5088288 mention the use of the Stirling cycle in cooling the electronic devices and in low operating temperature practices. In addition to the commonly used Stirling heat pumps with mechanical drive, US Patents Nos. 4183214, 4404802, 4888951, 5642622, disclose the development of Stirling heat engines and heat pumps based on the free piston principle.

Currently, due to their high efficiencies, the Stirling heat pumps with free-piston are an important alternative for the conventional systems.

The Stirling-type heat pump is a system consisting of a cold surface exposed to the air that absorbs heat energy from outside, a warm surface dissipating heat to air and a piston-displacer mechanism driven by a motor to compress and expand the gas within the heat pump in oscillation at a preselected frequency. While the piston driven by a linear electric motor is compressing the gas within the heat pump, an isothermic compression is realized due to the heat transmission from the warm surface to the external environment, and the temperature of the gas remains constant. Whereas at the cold side of the Stirling heat pumps, as heat energy is drawn in from outside by using the cold surface during the expansion of the gas within the heat pump, an isothermic expansion occurs and the temperature of the gas remains constant. Within the scope of the above described thermodynamic cycle, the Stirling heat pumps have a cold surface capable of absorbing heat energy from outside and a warm surface, capable of dissipating heat energy to outside.

In the common state of art wherein the Stirling heat pump is used, heat exchangers which can also be referred to as cold-side- and warm-side- heat exchangers are placed on the above described cold and warm surfaces. In cases when Stirling heat pumps are used instead of the conventional compressors, a heat exchanger must be placed within the refrigerator cabinet in order to convey the heat energy in the air to the cool surface, and this heat exchanger must be connected to the cold-side heat exchanger to create a secondary circulation circuit. A fluid containing water and additives, that circulates in the secondary circulation circuit will absorb the heat energy from the air within the refrigerator cabinet by flowing through the internally mounted heat exchanger. The fluid carrying this heat reaches the cold-side- heat exchanger, placed on the Stirling heat pump. Meanwhile, the gas (usually helium or nitrogen) within the Stirling heat pump absorbs the heat energy from the fluid flowing in the secondary circulation circuit due to the above mentioned reasons and transmits the heat energy absorbed by the said fluid from the air within the cabinet to the Stirling heat pump by means of the cold-side- heat exchanger. A circulation similar to that provided between the heat exchanger mounted in the cabinet and the cold-side- heat exchanger mounted on the Stirling heat pump, must also be provided between an external heat exchanger and the warm-side- heat exchanger on the Stirling heat pump, in order that the refrigerator can fully perform the cooling function.

In this case, due to a thermodynamic cycle created within the Stirling heat pump, the cooling fluid which is compressed at a constant temperature at the section where the warm side heat exchanger is installed, will transmit the heat energy absorbed from the air inside the refrigerator cabinet to the secondary fluid consisting of water, which circulates in the external side heat exchanger circuit mounted externally with respect to the refrigerator, by the assistance of the warm-side heat exchanger. Upon the dissipation of the heat energy absorbed by the secondary fluid, to the external environment through the heat exchanger, the cycle is completed.

As nitrogen or helium is used as the cooling fluid in the Stirling heat pump, and mostly water is used in the secondary circuits, this technology has no adverse effects on the environment. In case free-piston technology is used, the lateral loads and thus the frictions are reduced and consequently, the performance of the heat pump increases whereas the energy consumption of the refrigerator decreases. In addition to these advantages, in the cooling systems where Stirling heat pumps are used, as the use of tubular heat exchange as the case was in the prior art, limits the heat transfer surface area, the performance of the Stirling heat pumps remains below the value that can be obtained otherwise. Furthermore, due to the fact that in the secondary circulation circuits mostly water is used, the heat transport coefficient decreases in the internal and external heat exchangers which in turn increases the required heat transfer area. In this case, heat exchangers made of metallic pipes of various diameters appear to be disadvantageous.

The object of the present invention is to provide the construction of the heat exchangers used to absorb heat energy from the cooled volume and to dissipate the absorbed heat energy to the external environment, in compliance with the heat pumps operating by Stirling cycle.

The embodiment of a heat exchanger integrated to the refrigerator and which is suitable to the Stirling type heat pumps is illustrated in the attached drawings, wherein:
Figure 1, is the general view of the cooling system of the prior art.

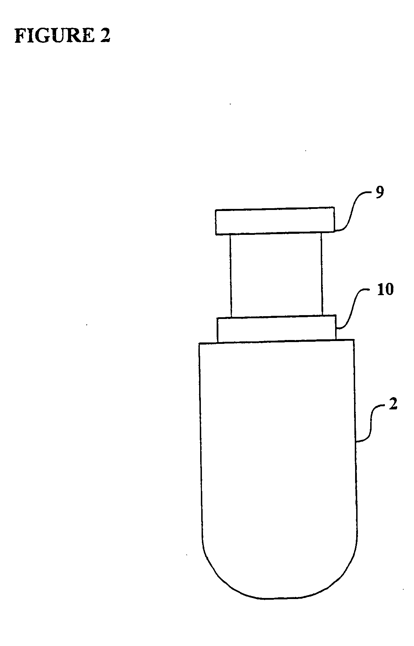

Figure 2, is the general view of the free-piston type Stirling heat pump.

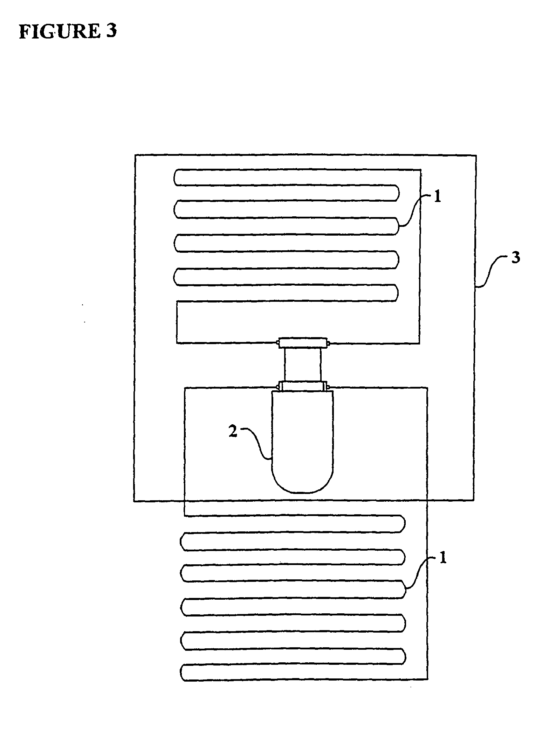

Figure 3, is the general view of the system using the Stirling heat pump.
Figure 4, is the general view of the heat exchanger.
Figure 5a, is the view showing the parallel flow of the fluid in the heat exchangers.
Figure 5b, is the view showing the serial flow of the fluid in the heat exchangers.

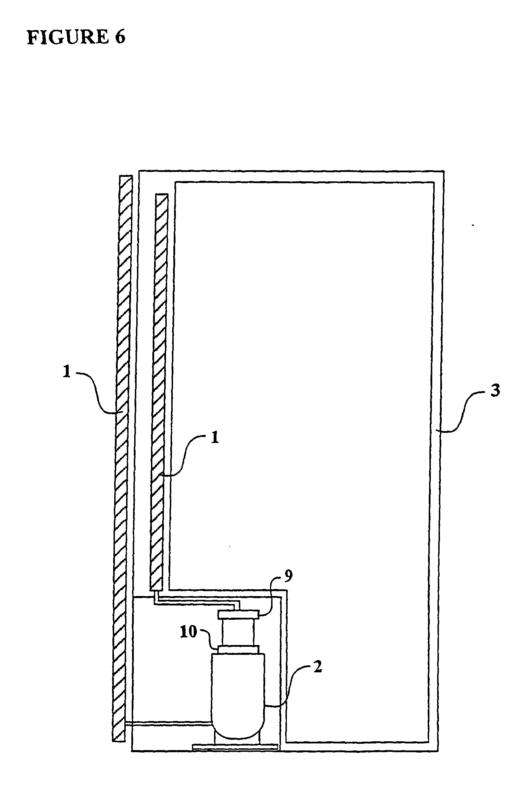

Figure 6, is the view of the heat exchangers applied in the refrigerator.
Figure 7, is the view of the heat exchanger with the insulation material.

The components shown in the figures are separately given reference numerals as follows:
1. Heat exchanger
2. Stirling heat pump
3. Cabinet
4. Compressor
5. Condenser
6. Evaporator
7. Throttle valve
8. Vacuum insulation panel
9. Cold surface
10. Warm surface
11. Cabinet inner liner
12. Cabinet outer liner
13. Insulation material, polyurethane

The flow character of the fluid flowing through the channels in the heat exchangers (1), i.e whether the flow is laminar or turbulent, is important to determine the properties and channel dimensions of the said heat exchangers (1).

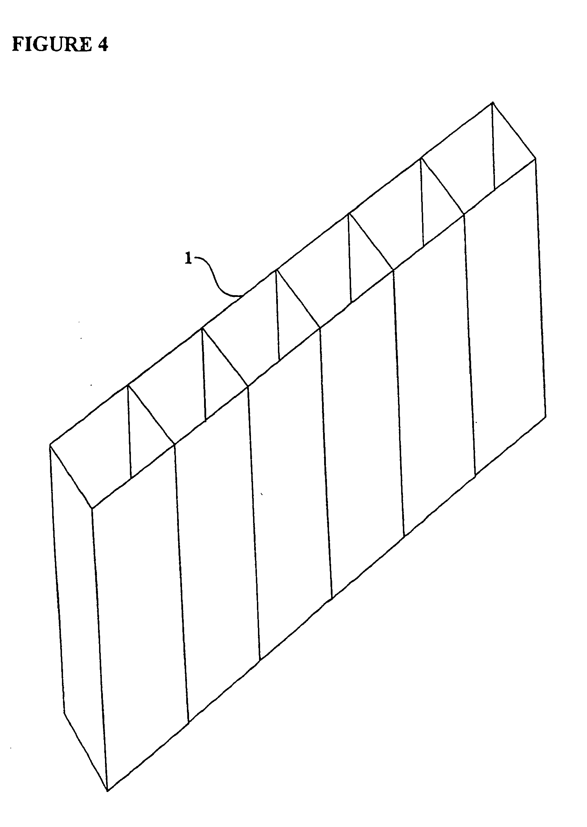

The heat exchangers (1) are made of parallel channels with square or rectangular sections. The dimensions of the channels vary within a range from 2x2 mm to 20x20 mm (Figure 4).

The steady state heat gain of a 150x50x50 cm refrigerator with only a single temperature compartment, insulated with conventional polyurethane of 4 cm, during a period when no new objects are put inside and when the door is not opened/closed, is approximately 25 W at +5°C - + 25°C, operating conditions.

Differing from the conventional compressors (4) the Stirling heat pumps (2) have the opportunity for capacity modulation and for this reason the value to be taken into consideration in the construction of an interior heat exchanger (1) is the heat gain in continuous operation. In case of opening/closing the door or putting new objects in the refrigerator cabinet, the Stirling heat pumps (2) can operate at a higher capacity in order to meet the added thermal load and when the heat gain attains the level of continuous operation, the refrigeration capacity of the heat pump (2) decreases to the normal value. These thermal loads are required to be added to the continuous operation heat gain so that food in the refrigerator are cooled in a sufficiently short time. In this case the maximum operational capacity of the heat exchanger (1) is obtained by adding the heat gain created by opening/closing the door or putting new objects in the refrigerator cabinet to the continuous operation heat gain.

For a refrigerator with the dimensions 150x50x50 cm, the maximum cold side heat exchanger (1) capacity, obtained by adding the average thermal load due to the opening/closing the door or putting new objects in the refrigerator cabinet to the continuous operation heat load, is around 40 W.

Another factor to be taken into consideration for designing the heat exchanger (1) is the difference between the inlet and outlet temperatures of the fluid flowing within the heat exchanger (1). In case this difference is big, the heat transmission within the heat exchanger (1) from the warmer section to the colder, will increase which in turn will have a negative effect on the process of heat absorption from the cabinet (3). This problem is solved by keeping the evaporation temperature of the cooling fluid, almost constant in the evaporator which provides the absorption of heat from the air within the refrigerators wherein conventional compressors are used. Whereas this problem is avoided in the heat exchangers compatible with Stirling heat pumps (2) by keeping the difference between the inlet and outlet temperatures of the fluid flowing within the heat exchanger (1), maximum at 1 °C. In the refrigerator with dimensions 150x50x50 cm, the maximum thermal load of which is determined as 40 W, the flow rate of the fluid used, must be approximately 9-10 g/s depending on its specific heat, in order to attain the said temperature difference of 1 °C. When the refrigerator volume is greater or cooling at lower temperatures is desired, this value rises up to 25 g/s.

In laminar flow state, heat transmission coefficient for a certain flow rate increases as the channel dimensions get smaller and as the flow section area is narrower, thus due to the fact that viscous frictions are decreased, an easier flow can be provided and heat transfer is influenced positively. For a turbulent flow , the narrowing of the section area has a positive effect on heat transfer and negative effect on frictional losses. Furthermore, the coefficient of friction and pressure drop decreases for a certain geometry as the flow rate increases, for laminar flows, and vice versa for turbulent flow .

In a 150x50x50 cm refrigerator, for a flow rate of 9-10 g/s in a heat exchanger (1) which is designed for a maximum thermal power of 40 W, in case the channels with square cross-sections are utilized, the flow shows laminar characteristics at 2.3-2.5 mm side lengths and in channels with smaller cross sections, this laminar characteristic is lost and turbulences begin. In case the volume of the refrigerator is increased or cooling at a lower temperature is desired, this limit for a value of 25 g/s as required for a 100 W thermal capacity, is approximately 6 mm. In order words, the flow through the channels with a section greater than 6 mm, is laminar and through the channels smaller than 6 mm, the flow is turbulent.

Using refrigerators with different volumes and different insulation materials cause variations in the dimensions of the channel sections. For this reason, detailed analyses are required in order to determine the channel cross-section.

In addition to the flow character, the geometrical shape i.e being square or rectangular, of the flow channels plays an important role with regard to the production methods and cost considerations. In case 10x10 mm square or 10x40 mm rectangular cross sectioned channels are used for a 9-10 g/s flow rate in a heat exchanger designed to absorb 40 W of thermal energy from the air inside a refrigerator with 150x50x50 cm dimensions, the flow rates of 9.5 cm/s and 2.3 cm/s are obtained respectively, in the channel.

When the thermal resistance between the fluid (water + additives) within the heat exchanger (1) and the air within the cabinet (3), under the same load value is calculated for both types of channels, approximately similar values are obtained. The reason for this is the fact that the coefficient of the heat transmission between the cabinet (3) inner liner and the air within the cabinet (3) plays a significant role on thermal resistance.

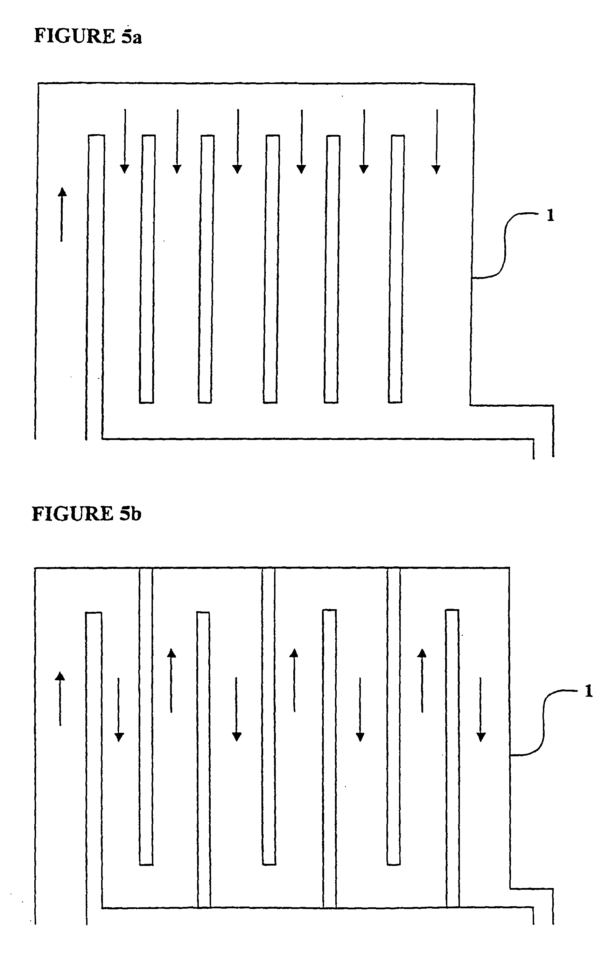

In the applications of the heat exchanger (1) to the domestic refrigerators, water containing additives or any other fluid is passed through the channels in series or in parallel and is collected by a collector to be directed towards the cold side of the Stirling cooler, depending on the capacity of the application (viscous frictions) (Figure 5a and 5b). The heat exchanger (1) consisting of square or rectangular sectioned channels, depending on the capacity of application, is manufactured so that it covers the rear wall or side walls and the rear wall of the refrigerator. All these operations are also valid for the externally mounted heat exchanger (I) that provides heat transfer from the fluid flowing in the secondary circuit to the environment; as well as for the heat exchanger (1) produced to absorb thermal energy from the air within the cabinet (3). From said heat exchangers (1), the one to be used on the cold side is manufactured together with the cabinet (3) inner liner.

The Stirling heat pump (2) has the capability to absorb heat energy from outside at the cold side and to dissipate heat energy to the external environment at the warm side. The heat energy absorbed from the air within the cabinet (3) by means of the heat exchanger (1) manufactured together with the cabinet (3) inner liner, is transported to the cold side of the Stirling heat pump (2). This heat energy dissipated to outside the heat pump (2) at the warm side, is transported to the externally mounted heat exchanger (1) by a separate fluid circuit in order to be transferred to the external environment with the help of this heat exchanger (1).

In case the heat exchangers (1) compatible with the Stirling heat pump (2) are used in the refrigerators, a heat transfer surface area required for the absorption of the thermal energy is provided at low temperature differences between the air within the cabinet (3) and the fluid circulating in the secondary circuit. Heat transfer realized at low temperature differences, reduces the irreversibilities, thus enhances the cooling performance of the heat pump (2) and the refrigerator while decreasing its energy consumption. As the heat exchanger (1) can be placed with a modification in the configuration of the heat exchanger (1), so that it covers the rear surface of the refrigerator entirely, a more homogeneous temperature distribution can be provided in the refrigerator cabinet (3). The heat exchangers (1) are produced as integrated with the refrigerator cabinet (3) inner liner, so that a decrease in the production cost of the refrigerator is attained. The heat exchanger is produced by utilizing thermoforming or plastic injection method.

General dimensions of the heat exchanger (1) play an important role in obtaining a high performance with the Stirling heat pumps. The heat exchanger (1) which is 75 cm high and 40 cm wide, consists of channels with square or rectangular cross sections, and can be placed as one piece on the cabinet (3) rear wall or as three pieces on the rear and side walls of the cabinet (3) of a refrigerator with the dimension, 150x50x50 cm.

In this case, the heat transfer surface area is 0.3 m² for a heat exchanger (1) placed as one piece on the cabinet (3) rear wall whereas it is 0.9 m² for a heat exchanger (1) placed as three pieces on the rear and side walls of the cabinet (3). As the flow conditions and heat transfer properties are the same in both configurations, the required temperature difference between the air inside the cabinet (3) and the fluid in the heat exchanger (1) is approximately 22 °C for a heat exchanger (1) placed as one piece on the cabinet (3) rear wall whereas it is 7.5 °C for a heat exchanger (1) placed as three pieces on the rear and side walls of the cabinet (3).

When the logarithmic mean temperature difference (lmtd) method which is commonly used in theory, is employed, the temperature of the fluid within the heat exchanger (1) is -18 °C for a heat exchanger (1) placed as one piece on the cabinet (3) rear wall, whereas it is -3 °C for a heat exchanger (1) placed as three pieces on the rear and side walls of the cabinet (3). The heat exchanger (1) placed as three pieces on the rear and side walls of the cabinet (3), is used to increase the temperature of the said fluid within the heat exchanger (1) by increasing the heat transfer surface area, thus to enhance the heat pump (2) performance and to reduce energy consumption.

The temperature of the fluid providing the absorption of the thermal energy from the cabinet (3) is almost the same as the evaporation temperature of the refrigerant within the evaporator used in the applications with compressors, in case the heat exchanger (1) is placed only on the cabinet (3) rear wall.

The cost will be higher when the heat exchanger is placed as three pieces on the rear and side walls of the cabinet (3), but the actual comparison must be made with the conventional systems. Nevertheless, the heat exchanger (1) surface area must be optimized, by considering energy consumption too.

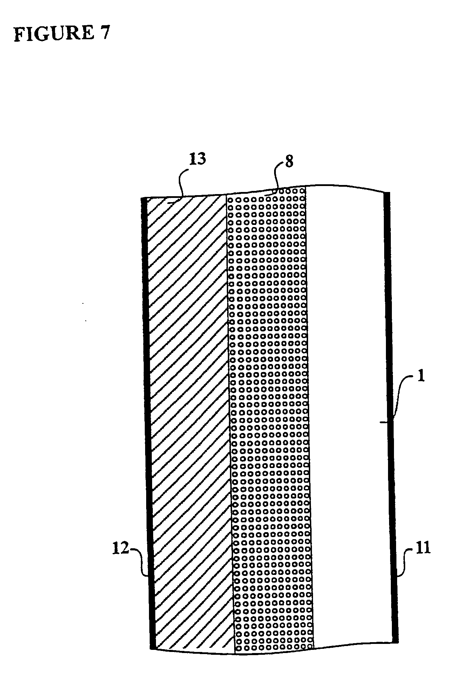

The production of the heat exchanger to provide the absorption of the heat energy from the cabinet, together with the cabinet (3) inner liner in such a manner that it covers the entire back surface of the refrigerator, causes the cabinet (3) liner to be colder than the normal applications. In this case, the heat exchanger to provide the absorption of the heat energy from the cabinet, absorbs a certain amount of thermal energy also from the external surrounding i.e environment of the cabinet (3), which leads to an increase in the energy consumption of the refrigerator. In order to avoid this, a material with a lower thermal conductivity than the traditional insulation materials, such as a vacuum insulation panel (8) is placed at the rear side of the heat exchanger (1) (Figure 7).

## Claims

1. A refrigerator comprising a refrigerator cabinet (3), a refrigerator cabinet door, a Stirling heat pump (2) and a heat exchanger (1) suitable for the Stirling heat pump (2), having parallel lateral surfaces, adjacent and bonded sections, which enables water containing additives or any other fluid to flow inside the heat exchanger (1), then to be collected by suitable channels so that it is directed towards a cold side of the Stirling heat pump (2), **characterised in that** a maximum operational capacity of the heat pump is calculated by adding a heat gain created by opening/closing the refrigerator cabinet door and by putting new substances in the refrigerator cabinet (3) to a continuous operation heat gain, the heat exchanger (1) is thermoformed or plastic injection molded, and the heat exchanger (1) to be used on the cold side is produced together with an inner liner of the cabinet (3).

2. A refrigerator as defined in Claim 1, **characterized in that** the heat exchanger (1) is configured in a way, that the fluid within the heat exchanger (1) flows in series.

3. A refrigerator as defined in Claim 1, **characterized in that** the heat exchanger (1) is configured in a way, that the fluid within the heat exchanger (1) flows in parallel.

4. A refrigerator as defined in Claims 1 to 3, **characterized in that** the channels of the heat-exchanger (1) are square cross-sectioned.

5. A refrigerator as defined in Claims 1 to 3, **characterized in that** the channels of the heat-exchanger (1) are rectangular cross sectioned.

6. A refrigerator as defined in Claims 1 to 5, **characterized in that** the heat exchanger (1) is produced in such a manner that it covers the back wall of the refrigerator.

7. A refrigerator as defined in Claims 1 to 5, **characterized in that** the heat exchanger (1) is produced in such a manner that it covers the side walls as well as the back wall of the refrigerator in order to increase the temperature of the said fluid within the heat exchanger (1) by increasing the heat transfer surface area, thus to enhance the heat pump (2) performance and to reduce energy consumption.

8. A refrigerator as defined in Claims 1 to 7 wherein the heat energy absorbed from the air within the cabinet (3) by means of the heat exchanger (1), is transferrable to the cold side, and the heat energy at the warm side is transportable to the external heat exchanger by means of a separate fluid circuit, in order to be dissipatable to the external environment, **characterized in that** it consists of more than one externally mounted heat exchangers.

9. A refrigerator as defined in Claims 1 to 8, **characterized in that** a vacuum insulating panel (8) the thermal conductivity of which is lower than a conventional polyurethane is placed at the back side of the heat exchanger (1).

10. A method to operate a refrigerator as defined in Claims 1 to 9, **characterized in that** the maximum difference between the inlet and outlet temperatures of the circulating fluid flowing within the heat exchanger (1), is 1 °C.

## Patentansprüche

1. Kühlschrank mit einem Kühlschrankgehäuse (3), einer Kühlschrankgehäusetür, einer Sterling-Wärmepumpe (2) und einem Wärmetauscher (1), der für die Sterling-Wärmepumpe (2) geeignet ist und parallele seitliche Oberflächen sowie angrenzende und damit verbundene Abschnitte besitzt, so dass Wasser, das Additive enthält, oder irgendein anderes Fluid, in den Wärmetauscher (1) strömen und dann durch geeignete Kanäle gesammelt werden kann, damit es zu einer kalten Seite der Sterling-Wärmepumpe (2) gelenkt wird, **dadurch gekennzeichnet, dass** die maximale Durchsatzleistung der Wärmepumpe **dadurch** berechnet wird, dass zu einem Wärmegewinn im Dauerbetrieb ein Wärmegewinn addiert wird, der durch ein Öffnen/Schließen der Kühlschrankgehäusetür und durch Legen neuer Substanzen in das Kühlschrankgehäuse (3) erzeugt wird, der Wärmetauscher (1) wärmegeformt oder durch Spritzguss aus Kunststoff gebildet ist und der Wärmetauscher (1), der auf der kalten Seite verwendet werden soll, zusammen mit einer Innenverkleidung des Gehäuses (3) hergestellt wird.

2. Kühlschrank nach Anspruch 1, **dadurch gekennzeichnet, dass** der Wärmetauscher (1) in der Weise konfiguriert ist, dass das Fluid in dem Wärmetauscher (1) seriell strömt.

3. Kühlschrank nach Anspruch 1, **dadurch gekennzeichnet, dass** der Wärmetauscher (1) in der Weise konfiguriert ist, dass das Fluid in dem Wärmetauscher (1) parallel strömt.

4. Kühlschrank nach den Ansprüchen 1 bis 3, **dadurch gekennzeichnet, dass** die Kanäle des Wärmetauschers (1) einen quadratischen Querschnitt besitzen.

5. Kühlschrank nach den Ansprüchen 1 bis 3, **dadurch gekennzeichnet, dass** die Kanäle des Wärmetauschers (1) einen rechtwinkligen Querschnitt besitzen.

6. Kühlschrank nach den Ansprüchen 1 bis 5, **dadurch gekennzeichnet, dass** der Wärmetauscher (1) in der Weise hergestellt ist, dass er die Rückwand des Kühlschranks abdeckt.

7. Kühlschrank nach den Ansprüchen 1 bis 5, **dadurch gekennzeichnet, dass** der Wärmetauscher (1) in der Weise hergestellt ist, dass er sowohl die Seitenwände als auch die Rückwand des Kühlschranks abdeckt, um die Temperatur des Fluids in dem Wärmetauscher (1) durch Erhöhen der Wärmeübertragungsoberfläche zu erhöhen, wodurch die Leistung der Wärmepumpe (2) erhöht und der Energieverbrauch gesenkt werden.

8. Kühlschrank nach den Ansprüchen 1 bis 7, bei dem die von der Luft in dem Gehäuse (3) mittels des Wärmetauschers (1) absorbierte Wärmeenergie zu der kalten Seite übertragen werden kann und die Wärmeenergie auf der warmen Seite zu dem äußeren Wärmetauscher mittels eines getrennten Fluidkreises transportiert werden kann, um an die äußere Umgebung abgegeben zu werden, **dadurch gekennzeichnet, dass** er aus mehr als einem außen angebrachten Wärmetauscher besteht.

9. Kühlschrank nach den Ansprüchen 1 bis 8, **dadurch gekennzeichnet, dass** an der Rückseite des Wärmetauschers (1) eine Vakuumisolationstafel (8) angeordnet ist, deren Wärmeleitfähigkeit niedriger als herkömmliches Polyurethan ist.

10. Verfahren zum Betreiben eines Kühlschranks nach den Ansprüchen 1 bis 9, **dadurch gekennzeichnet, dass** die maximale Differenz zwischen der Einlass- und der Auslasstemperatur des in dem Wärmetauscher (1) strömenden zirkulierenden Fluids 1 °C beträgt.

## Revendications

1. Un réfrigérateur du type comprenant une carrosserie ou enceinte de réfrigérateur (3), une porte d'enceinte de réfrigérateur, une pompe à chaleur du type Stirling (2) et un échangeur de chaleur (1) approprié à la pompe à chaleur Stirling (2), présentant des surfaces latérales parallèles, et des sections adjacentes réunies entre elles, ce qui permet à de l'eau, ou tout autre fluide contenant des additifs, de circuler à l'intérieur de l'échangeur de chaleur (1), puis d'être recueillie par des canaux appropriés, de manière telle qu'elle soit dirigée vers un côté froid de la pompe à chaleur Stirling (2), ce réfrigérateur étant **caractérisé en ce que** l'on calcule une capacité opérationnelle maximale de la pompe à chaleur, en additionnant un gain de chaleur créé par l'ouverture / la fermeture de la porte de l'enceinte de réfrigérateur et l'introduction de nouvelles substances dans l'enceinte de réfrigérateur (3) et un gain opérationnel continu de chaleur, l'échangeur de chaleur (1) étant thermoformé ou moulé par injection de matière plastique, et l'échangeur de chaleur (1) destiné à être utilisé du côté froid étant réalisé en même temps qu'un chemisage intérieur de l'enceinte (3).

2. Un réfrigérateur selon la revendication 1, **caractérisé en ce que** l'échangeur de chaleur (1) a une configuration telle que le fluide circule en série à l'intérieur de l'échangeur (1).

3. Un réfrigérateur selon la revendication 1, **caractérisé en ce que** l'échangeur de chaleur (1) a une configuration telle que le fluide circule en parallèle à l'intérieur de l'échangeur de chaleur (1).

4. Un réfrigérateur selon l'une quelconque des revendications 1 à 3, **caractérisé en ce que** les canaux de l'échangeur de chaleur (1) ont une section transversale carrée.

5. Un réfrigérateur selon l'une quelconque des revendications 1 à 3, **caractérisé en ce que** les canaux de l'échangeur de chaleur (1) ont une section transversale rectangulaire.

6. Un réfrigérateur selon l'une quelconque des revendications 1 à 5, **caractérisé en ce que** l'échangeur de chaleur (1) est construit d'une manière telle qu'il recouvre la paroi arrière du réfrigérateur.

7. Un réfrigérateur selon l'une quelconque des revendications 1 à 5, **caractérisé en ce que** l'échangeur de chaleur (1) est construit d'une manière telle qu'il recouvre les parois latérales aussi bien que la paroi arrière du réfrigérateur, en vue d'accroître la température dudit fluide à l'intérieur de l'échangeur de chaleur (1), en augmentant la superficie de transfert thermique, et ainsi, en accroissant les performances de la pompe à chaleur tout en réduisant la consommation d'énergie.

8. Un réfrigérateur selon l'une quelconque des revendications 1 à 7, **caractérisé en ce que** l'énergie thermique absorbée par l'air situé à l'intérieur de l'enceinte de réfrigérateur (3) grâce à l'échangeur de chaleur (1) peut être transférée au côté froid, tandis que l'énergie thermique du côté chaud peut être transportée jusqu'à l'échangeur de chaleur extérieur grâce à un circuit fluidique séparé, en vue d'être dissipé dans l'environnement extérieur, **caractérisé en ce qu'**il comporte plus d'un échangeur de chaleur monté à l'extérieur.

9. Un réfrigérateur selon l'une quelconque des revendications 1 à 8, **caractérisé en ce qu'**un panneau isolant par le vide (8), et présentant ainsi une conductivité thermique inférieure à celle d'un panneau classique en polyuréthane est placé sur le côté arrière de l'échangeur de chaleur (1).

10. Une méthode pour faire fonctionner un réfrigérateur selon l'une quelconque des revendications 1 à 9, **caractérisée en ce que** la différence maximale entre les températures d'entrée et de sortie du fluide en circulation situé à l'intérieur de l'échangeur de chaleur (1) est de 1 °C.
